# EUROPEAN PATENT SPECIFICATION

(11) **EP 1 772 351 B1**
(45) Date of publication and mention of the grant of the patent: **26.03.2008**
(21) Application number: 05109203.9
(22) Date of filing: 04.10.2005
(51) Int. Cl.: B62D 25/00, B62D 21/00

(54) **Structural beam for a vehicle body.**
Trägerstruktur für eine Kraftfahrzeugkarosserie
Poutre pour une carrosserie de véhicule automobile

(43) Date of publication of application: 11.04.2007
(73) Proprietor: Ford Global Technologies, LLC, Dearborn, MI 48126 (US)
(72) Inventor: Weiman, Martin, 414 82 Göteborg (SE); Hagelskytt, Esa, 434 30 Kungsbacka (SE); Appelgren, Anders, 422 50 Hisingsbacka (SE); Hossein, Rezaei, 431 33 Mölndal (SE)
(74) Representative: Andersson, Per Rune

(56) References cited:
- EP-A- 1 118 528
- DE-A1- 10 249 117
- US-A- 5 246 264
- US-A- 5 934 744

## Description

### TECHNICAL FIELD

The present invention relates to a structural beam for mounting in a vehicle body, which structural beam comprises a base beam having a first side surface and a second side surface connected by a bottom surface, and a reinforcement means attached to the base beam. The invention further relates to a method for producing such a structural beam.

### BACKGROUND ART

Motor vehicles, such as automobiles, trucks, SUV's (Sport Utility Vehicle) and other vehicles intended for personal transportation, are constructed from structural beams constituting a framework in the vehicle body. Such structural beams may, for example, be provided parallel with the longitudinal axis of the vehicle in line with its normal forward direction of travel, or transversely over the vehicle body. It is also known to provide said beams on the left and right hand side of the vehicle body so as to help forming a passenger compartment in the vehicle.

Wherever positioned in the car, the structural beams play an important role in maintaining the framework, especially when the vehicle receives loads from the front, rear or the side during, for example, car crashes. For this reason, much effort has been put down in order to reinforce such beams so as to increase the bending and the torsional stiffness of the beams.

US 5,934,744 describes a structural cross car beam mounted transversely over the car onto "A-pillars" on opposite sides of the vehicle body, which beam is used to support an instrument panel. This base beam has a generally U-shaped cross section, which, inter alia, is reinforced by providing further U-shaped beams inside the base beam. Although such reinforcement works sufficiently, it is associated with the drawback that the size and shape of the inner U-shaped beam has to be perfectly adapted to the outer base beam in order to fit accurately inside. In practice, the vehicle components often have minor differences in size and shape, with the result that unwanted gaps or too tightly fit areas occur between the two U-shaped beams. Such discrepancies give rise to geometry distortions when the beams later are welded together or subjected to loads. US 5,934,744 also discloses an embodiment in which an inner beam has a W-shaped cross section. Although such an inner beam may appear as having a more flexible shape, the necessary stiffness required to reinforce the outer base beam limits the flexibility of such a construction, giving rise to similar drawbacks as in the above case.

Hence there is a need in the art to provide an improved reinforced structural beam for a framework of a motor vehicle.

### DISCLOSURE OF INVENTION

The above problem is solved by a structural beam having a reinforced base beam characterised in that the reinforcement means comprises a first reinforcement means having a first side section and a first bottom section and a second reinforcement means having a second side section and a second bottom section, wherein the first side section of the first reinforcement means is attached to the first side surface of the base beam and the second side section of the second reinforcement means is attached to the second side surface of the base beam, and the first and second bottom section of the first and second reinforcement means are arranged in overlap and are attached to the bottom surface of the base beam.

According to the claimed invention, problems of geometry distortions are avoided due to the reinforcement comprising two reinforcement means which are separately mounted to the base beam. In this manner each reinforcement means may be optimally fitted to the base beam before being fixed towards the same. At the same time, the structural beam is reinforced by the provision of a three-sheet thickness in the desired area which maintains torsional and bending stiffness, and also bending strength.

In one embodiment the base beam has a substantially U-shaped cross section with a first side surface, a bottom surface and a second side surface forming an inside area having an open area substantially opposite the bottom surface. The ends of the side surfaces may extend further in the form of flanges which are angled relative the ends of the side surfaces. Such flanges may be used so as to secure the base beam to the vehicle body. The base beam may have a U-shaped cross section such that the angle between the bottom surface and the first side surface and/or the second side surface, respectively, is between 155-70°, preferably between 145-80° and most preferably between 135-90°. Here, it may be noted that when the angle is less than 90°, a first and second reinforcement means may still be easily fitted inside the base beam, in contrast to the fitting of a continuous U-shaped beam inside another U-shaped beam which becomes very difficult. Furthermore, it is not necessary that both of the side surfaces have the same angle in relation to the bottom surface of the base beam. Due to the purpose of the base beam and the positioning relative other components in the vehicle body, it may be expedient to angle one side surface steeper than the other. The base beam is preferably made as a continuous piece, that is to say the side surface extends continuously into the bottom surface which further extends continuously into the second side surface, thus simplifying construction. The width of the base beam, that is to say, the width between the ends of the side surfaces is preferably 1-30 cm, more preferably 2-20 cm, and most preferably 4-10 cm.

According to a further embodiment, the first and/or second reinforcement means may have a substantially L-shaped cross section. The first and/or second reinforcement means may have an L-shaped cross section such that the angle between the bottom section and the first and second side sections, respectively, is between 155-90°, preferably between 145-90° and most preferably between 135-90°. Of course, it is not necessary that both of the side sections have the same angle in relation to the bottom section of the reinforcement means. However, the angle between a side section and a bottom section of the reinforcement means should substantially correspond to the angle between the side surface and bottom surface of the beam to which side surface and bottom surface that reinforcement means is attached. The first and/or second reinforcement means are also advantageously made as a continuous piece, respectively, that is to say the side section extends continuously into the bottom section in each reinforcement means.

The reinforced area in the structural beam gains improved stiffness the greater the overlap is between first and second reinforcement means. Therefore, the overlap of the first and second bottom section of the first and/or second reinforcement means is at least 1/3, preferably at least ½, and most preferably at least 2/3, of the extension of the bottom surface of the base beam.

According to one more embodiment, the first and/or second reinforcement means are attached to the base beam by means of welding, either by welding the entire area, or by point welding. A preferred form of attachment is laser welding, in particular when used in the motor vehicle industry for securing components such as structural beams in the framework of vehicles. The reinforcement means may further be secured to the base beam by means of mechanical fastening, such as riveting, clinching or the like. As an alternative, adhesion may be used as an attachment means.

The attachment means may advantageously be optimised in relation to the material from which the base beam and/or the first and the second reinforcement means are made. In one embodiment, the first and/or second reinforcement means are made from ultra high strength steel, which is preferred when it is desired to reinforce areas of the vehicle body prone to be subjected to great loads. In cases where the deformation is expected to have higher tenacity, softer steels such as mild steel, high strength steel (hss), extra high strength steel, here ordered in a scale of increasing strength, may be used. Generally, any metal appropriate for the construction of a vehicle body may be used. For example a common metal such as aluminium may be used, or more uncommon materials such as magnesium or titanium. In addition, plastic may be used in certain cases, such as a structural beam for an instrument panel.

According to the present invention a structural beam according to claim 1 is advantageously provided in a vehicle such as an automobile, SUV, truck or the like. Another advantage of the present invention is that the structural beam in a motor vehicle according to the above exhibits an improved resistance in the bottom area of the base beam towards bending forces and torsional forces, for example at the impact of an car crash. The improved resistance is due to the fact that the optimised fitting of the separate first and second reinforcement means to the base beam avoids geometry distortions as well as the three-sheet thickness providing improved stiffness. Yet another advantage of the present invention is that the reinforcement by the three-sheet thickness enables reinforcement where most needed, thus avoiding excess use of expensive material and keeping the total weight at a minimum. As a further consequence thereof the free volume inside the base beam is maximised as the reinforcement uses a minimum of space, that is to say, while providing a bottom area having a three-sheet thickness, the side areas only exhibits a two-sheet thickness thus giving rise to increased space inside the structural beam. In an alternative embodiment the overlap of the first and second bottom sections of the first and second reinforcement means may vary in a direction along the structural beam such that the extent of the overlap is greater in the areas where the structural beam is most prone to be subjected to load. Alternatively, only said areas where the structural beam is most prone to be subjected to load may be reinforced, thus leaving the areas of unconcern without reinforcement, for example, one or both of the end portions of the structural beam may be free from reinforcement. Also in these two latter embodiments, the free volume inside the base beam is maximised as the reinforcement uses a minimum of space.

The invention further relates to a method for producing a structural beam according to claim 1, characterised by the steps of:
1) arranging the first reinforcement means inside the base beam such that the bottom section of the first reinforcement means is positioned on the bottom surface of the base beam, and the first side section of the first reinforcement means is arranged in conjunction with the first side surface of the base beam;
2) attaching the first side section of the first reinforcement means to the first side surface of the base beam;
3) arranging the second reinforcement means inside the base beam such that the second bottom section of the second reinforcement means is positioned on the first bottom section of the first reinforcement means, and the second side section of the second reinforcement means is arranged in conjunction with the second side surface of the base beam;
4) attaching the second side section of the second reinforcement means to the second side surface of the base beam; and
5) attaching the first and second bottom section of the first and second reinforcement means to the bottom surface of the base beam.

As the first reinforcement means is first attached, for example by welding, to the first side surface of the base beam by its first side section, and the second reinforcement means is then attached to the second side surface of the base beam by its second side section, and finally the bottom sections of the reinforcement means are attached to the bottom surface of the base beam, a three-point attachment, or a three-point welding is achieved. However, it may also be expedient to attach the first bottom section of the first reinforcement means to the bottom surface of the base beam in step 2) by means of a temporary or minor welding. Thereby it is possible to make sure that the geometry is maintained and/or the components are kept in place before the arranging and attaching of the second reinforcement means to the structural beam. Such an attachment or welding of the reinforcement means to all three sides of the described base beam gives rise to the most effective strength. In contrast thereto, this welding is normally not possible to accomplish due to the geometry distortions arising when fitting a U-shaped profile into a U-shaped base beam.

As the first and second reinforcement means are assembled one at the time to the base beam, no gaps are introduced between the reinforcement means and the base beam. At the same time a maximum volume inside the reinforced beam is achieved while the base beam ends up additionally reinforced with the three-sheet thickness to support the compression load in the bottom surface.

In another embodiment, the structural beam in accordance with the above is achieved by arranging the first and second reinforcement means on the outside the base beam. Here, inside of the base beam refers to the space enclosed by the side surfaces and bottom surface of the cross section of the base beam, and outside refers to the open space outside the side surfaces and bottom surface of the cross section of the base beam.

Alternatively, in accordance with the present invention, one of the first and second reinforcement means may be arranged on the inside of the base beam and the other one of the first and second reinforcement means may be arranged on the outside of the base beam.

In the two latter cases, the desired three-sheet thickness is still achieved as well as the aim of avoiding to affect the geometry.

Other features and advantages of the present invention will be readily appreciated as the same becomes better understood after reading the subsequent description when considered in connection with the accompanying drawings.

### BRIEF DESCRIPTION OF DRAWINGS

In the following text, the invention will be described in detail with reference to the attached drawings. These drawings are used for illustration only and do not in any way limit the scope of the invention. In the drawings:
- Figure 1: shows a schematic drawing of the framework of a vehicle comprising structural beams according to the invention;
- Figure 2: shows a schematic view of a cross-section through a structural beam of the vehicle in Fig. 1;
- Figure 3: shows a schematic view of another cross-section through a structural beam of the vehicle in Fig. 1;
- Figure 4: shows a schematic view of another cross-section through a structural beam of the vehicle in Fig. 1;
- Figure 5: shows a schematic view of a cross-section through a structural beam of the vehicle in Fig. 1;
- Figure 6: shows a schematic view of another cross-section through a structural beam of the vehicle in Fig. 1;
- Figure 7: shows a schematic view of another cross-section through a structural beam of the vehicle in Fig. 1;
- Figure 8: shows a schematic view of another cross-section through a structural beam of the vehicle in Fig. 1;

### EMBODIMENTS OF THE INVENTION

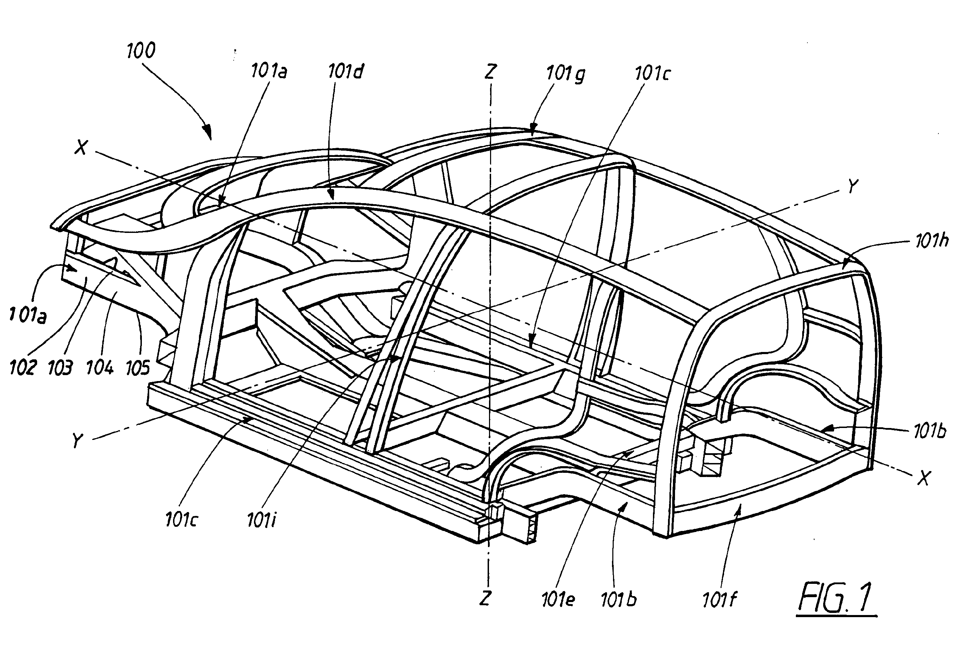

In the following text any references to direction with respect to the vehicle, such as "transversal", "longitudinal", "front" and "rear", are given relative to the main longitudinal axis of the vehicle, in its normal and forward direction of travel. Also "lower" and "upper" refers to directions when the vehicle is in its normal direction of travel. The main longitudinal axis through the vehicle is indicated by a line X-X in Fig. 1. A main transversal axis through the vehicle intersects the main longitudinal axis X-X and is indicated by a line Y-Y in Fig. 1. The main longitudinal axis and the main transversal axis forms an X-Y plane, perpendicular to which a vertical Z-Z axis is extending, defining directions of lower and upper, lower being below the X-Y plane, and upper being above the X-Y plane when the vehicle is in its normal direction of travel.

Fig. 1 shows a schematic drawing of a framework of a vehicle body 100 constructed from structural beams 101 according to the invention. The framework of the vehicle body in question is here for an automobile but may of course be for any motor vehicle such as a truck, a SUV, or the like. As can be seen in the figure, structural beams 101 according to the invention may be located in various positions in the framework. A longitudinal front structural beam 101a extending in a length dimension parallel with the main longitudinal axis of the vehicle comprises a base beam 102 exhibiting a first side surface 103 and a second side surface 105 connected by a bottom surface 104. The following indicated structural beams 101 a-i in the framework of the vehicle body correspondingly exhibits a first side surface, second side surface and bottom surface, however, not indicated with reference numerals. Fig. 1 correspondingly shows a longitudinal rear structural beam 101 b present in the rear of the vehicle body. In between the front and rear portion of the vehicle body a longitudinal intermediate lower structural beam 101c is positioned, forming a base to the floor of the passenger compartment of the vehicle. Extending essentially parallel in its length dimension with the longitudinal rear structural beam 101 b and the longitudinal intermediate lower structural beam 101c is a longitudinal upper structural beam 101d, which curves down towards the longitudinal front structural beam 101 a.

For the described vehicle, the vehicle body will be symmetric relative to the central longitudinal axis of the vehicle. Therefore, the indicated longitudinal beams are present on both sides of the vehicle and will thus be given the same reference numerals. In the lower portion of the vehicle, a transversal lower structural beam 101e is extending across the vehicle body and is mounted to the longitudinal lower structural beam and its symmetrical counterpart 101c thus contributing in forming the floor of the vehicle body. In the rear portion of the vehicle body, a transversal rear structural beam 101f connects the longitudinal rear structural beam and its symmetrical counterpart 101 b. In a similar manner the transversal upper structural beams 101g,h connect the longitudinal upper structural beam and its symmetrical counterpart 101 d thus contributing in forming a framework of the roof of the vehicle body. In the side area, located between the longitudinal lower structural beam 101c and the longitudinal upper structural beam 101 d, a side structural beam 101 i is positioned so as to contribute in forming a framework for a passenger compartment.

The indicated structural beams are only examples of positions where the beams may be located in the vehicle body. As is evident from the figure, a large number of beams (not being indicated) may correspondingly be constructed from structural beams according to the invention. In addition, the structural beams according to the invention may be present in a vehicle body in positions not shown, for example, in the instrument panel as described in US 5,934,744.

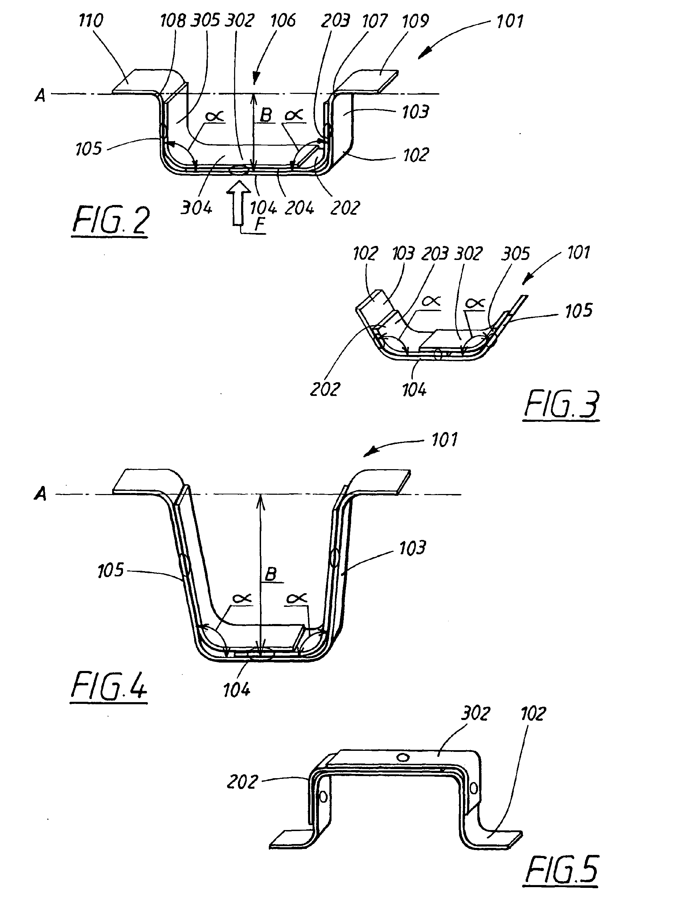

Fig. 2 shows a schematic perspective view of a cross-section through a structural beam 101, such as a side structural beam, in the vehicle as described in Fig. 1. Here only a portion of the structural beam 101 is shown. In reality the structural beam 101 normally extends further as disclosed in Fig. 1, that is to say, the structural beam has a length extension such that different portions or other structural beams of the framework of the vehicle body may be connected. The structural beam 101 which is intended to be mounted as part of a vehicle body comprises a base beam 102 having a first side surface 103 and a second side surface 105 connected by a bottom surface 104. The first side surface 103 exhibits a first end 107 and the second side surface 105 exhibits a second end 108, between which an imaginary line A may be drawn so as to indicate a height B between the bottom surface and the line A. The base beam 102 has a U-shape which extends in a continuous manner forming an inside space open only in an area 106 opposite the bottom surface. The angle α between the side surfaces 103, 105 and the bottom surface 104 is essentially 90°. The side surfaces 103, 105 each extend from the end surfaces 107, 108 further into first and second flanges 109, 110 having an angle α of essentially 90° relative the side surfaces in an outward direction from the space enclosed by the U-shape. Such flanges may be used so as to secure the base beam to the vehicle body in appropriate areas. The relation between the height of the side surfaces 103, 105 and the bottom surface 104 is about 0.4:1. Here "height" refers to the shortest extension between the bottom surface 104 and line A connecting the ends of the side surface of the U-shape.

The base beam 102 is reinforced by reinforcement means comprising a first reinforcement means 202 having a first side section 203 and a first bottom section 204. The first reinforcement means 202 is point welded to the inside surface of the first side surface 103 of the U-shaped base beam 102 with its first side section 203. The base beam 102 is further reinforced by a second reinforcement means 302 having a second side section 305 and a second bottom section 304. The second reinforcement means 302 is point welded to the inside surface of the second side surface 105 of the U-shaped base beam 102 with its second side section 305. Both the first and second bottom sections 204, 304 of the first and second reinforcement means 202, 302 are point welded to the bottom surface 104. The welding areas are indicated as elliptical circles in all the figures 2-4 and 6-8. Both the first and second reinforcement means 202, 302 have an L-shaped cross-section facing each other when attached to the base beam 102, thus essentially following the U-shape of the base beam 102. Neither of the first or second side sections 203, 305 extend beyond the first and second ends of the first and second side surfaces 103, 105. The first and second reinforcement means 202, 302 are correspondingly exhibiting an angle α between the first and second side sections 203, 305 and first and second bottom sections 204, 304, respectively, of essentially 90°. The first and second bottom sections 204, 304 are positioned in overlap and covering about 2/3 of the bottom surface 104, thereby providing a three-sheet reinforcement.

Fig. 3 shows as in Fig. 2 a schematic perspective view of a cross-section through a structural beam 101 comprising the same features as those disclosed in Fig. 2. In contrast to Fig. 2, there are no flanges extending from the side surfaces 103, 105. Furthermore, the angle α between the side surfaces 103, 105 and the bottom surface 104 of the base beam 102 as well as the corresponding angle α between the first and second side sections 203, 305 and first and second bottom sections 204, 304 of the first and second reinforcement means 202, 302, respectively, are essentially 120°. The first and second bottom sections 204, 304 are positioned in overlap and covering about 1/3 of the bottom surface 104. As in Fig. 2, the first and second reinforcement means 202, 302 are welded to the inside surface of the first and second side surfaces 103, 105 of the U-shaped base beam 102 with the first and second side sections 203, 305, and to the inside surface of the bottom surface 104 of the U-shaped base beam 102 with the second bottom sections 204, 304.

Fig. 4 shows a cross-section of a structural beam 101 having the same features as those disclosed in Fig. 2, but differs in a steeper U-shape, such that the relation between the height B of the side surfaces 103, 105 and the bottom surface 104 is about 1.2:1. Here "height" refers to the shortest extension between the bottom surface 104 and the line A connecting the ends of the side surface of the U-shape. Preferably, the height is in the interval from about 0.25:1 to about 1.5:1, more preferably from 0.4:1 to about 1.2:1. The angle α₁ between the first side surface 103 and the bottom surface 104 is essentially 95°, while the angle α₂ between the second side surface 105 and the bottom surface 104 is essentially 100°.

An alternative arrangement is shown in Fig. 5, in which the first and second reinforcement means 202, 302 are attached to the outside of the base beam 102. Here the first and second reinforcement means 202, 302 are attached to the base beam 102 by means of riveting as indicated by circles in the figure.

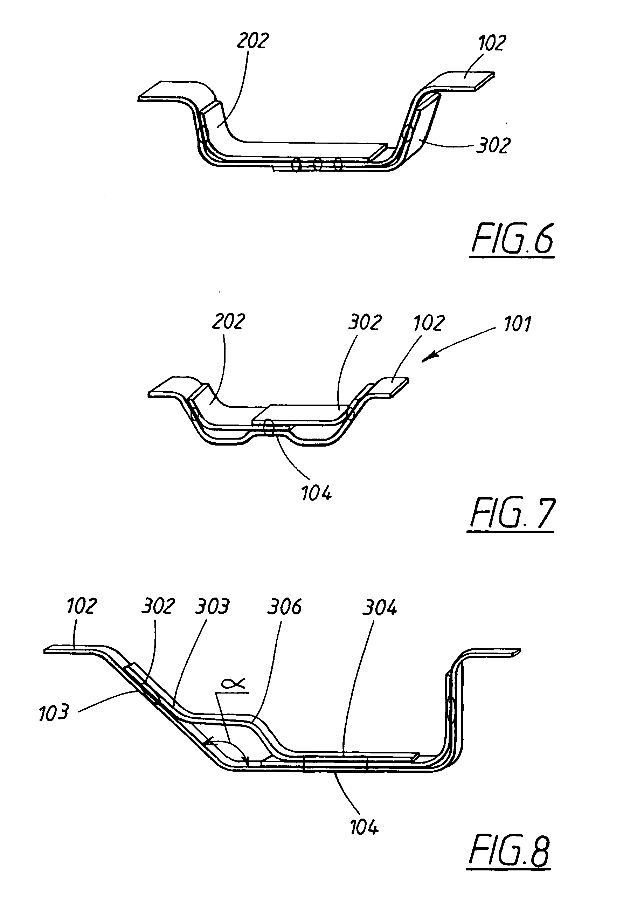

A further alternative arrangement is shown in Fig. 6, in which the first reinforcement means 202 is attached to the inside of the base beam 102, and the second reinforcement means 302 is attached to the outside of the base beam 102.

Fig. 7 discloses an alternative embodiment in which the base beam 102 has a W-shaped, or a double U-shaped cross section, and wherein the bottom surface 104 constitutes a bridge between the two U's. Otherwise the structural beam 101 comprises a base beam 102, first and second reinforcement means 202, 302 arranged and attached to each other in a manner corresponding to that shown in Fig. 2. By providing a cross section having a W-shape, or a double U-shape, channels are formed between the base beam 102 and the first and second reinforcement means 202, 302, which channels may be used as, inter alia, ventilation channels. As is evident from the figure, a three-point attachment, or a three-point welding is still achieved, at the same time as three-sheet reinforcement is provided.

In Fig. 8 an alternative embodiment of a reinforcement means is disclosed. Here, the second reinforcement means 302 is provided with a stepped portion 306 such that a channel is formed in relation to the base beam 102 having the above-described U-shape. The angle α between the first side surface 103 and the bottom surface 104 of the base beam 102 is about 135°, which angle essentially corresponds to that between the second side section 303 and the second bottom section 304 of the second reinforcement means 302. Such a channel may also be used for ventilation or the like. In accordance with the invention, also in this embodiment a three-point attachment, or a three-point welding is still achieved, at the same time as three-sheet reinforcement is provided.

In all of the described embodiments, when subjected to an impact load F in the bottom area comprising the bottom surface 104, the first bottom section 204 and the second bottom section 304 as shown in Fig. 1, the three-sheet thickness will take up the load and distribute the load in the three-sheet construction. The force distribution will of course depend on the extent of the overlap of the first and second reinforcement means 202, 302, wherein the relation is such that the greater the overlap the greater the torsional stiffness and bending stiffness or bending strength.

Of course, the above-described overlap of the first and second bottom sections of the first and second reinforcement means may vary in the length extension along the structural beam such that the extent of the overlap is greater in certain exposed areas and the overlap is minor or non-existent in areas of the structural beam less expected to be subjected to load.

## Claims

1. Structural beam (101) for mounting in a vehicle body, which structural beam (101) comprises a base beam (102) having a first side surface (103) and a second side surface (105) connected by a bottom surface (104), and a reinforcement means attached to the base beam (102), **characterized in that** the reinforcement means comprises a first reinforcement means (202) having a first side section (203) and a first bottom section (204) and a second reinforcement means (302) having a second side section (305) and a second bottom section (304), wherein the first side section (203) of the first reinforcement means (202) is attached to the first side surface (103) of the base beam (102) and the second side section (305) of the second reinforcement means (302) is attached to the second side surface (105) of the base beam (102), and the first and second bottom sections (204, 304) of the first and second reinforcement means (202, 302) are arranged in overlap and are attached to the bottom surface (104) of the base beam (102).

2. A structural beam (101) according to claim 1, **characterized in that** the base beam (102) has a substantially U-shaped cross section.

3. A structural beam (101) according to claim 2, **characterized in that** the base beam (102) has a U-shaped cross section such that the angle between the bottom surface (104) and the first side surface (103) and/or the second side surface (105), respectively, is between 155-70°, preferably between 145-80° and most preferably between 135-90°.

4. A structural beam (101) according to claims 1, 2 or 3, **characterized in that** the first and/or second reinforcement means (202, 302) have a substantially L-shaped cross section.

5. A structural beam (101) according to any one of the preceding claims, **characterized in that** the first and/or second reinforcement means (202, 302) have an L-shaped cross section such that the angle between the bottom section (204,304) and the first and second side section (203, 305), respectively, is between 155-90°, preferably between 145-90° and most preferably between 135-90°.

6. A structural beam (101) according to any one of the preceding claims, **characterized in that** the overlap of the first and second bottom section (203, 04) of the first and second reinforcement means (202, 302) is at least 1/3, preferably at least ½, and most preferably at least 2/3, of the extension of the bottom surface (104) of the base beam (102).

7. A structural beam (101) according to any one of the preceding claims, **characterized in that** the first and/or second reinforcement means (202, 302) are attached to the base beam (102) by means of welding, mechanical fastening, adhesion, or the like.

8. A structural beam (101) according to any one of the preceding claims, **characterized in that** the first and/or second reinforcement means (202, 302) are made from ultra high strength steel.

9. A vehicle such as an automobile, SUV, truck or the like provided with a structural beam (101) according to claim 1, comprising a base beam (102) having a first side surface (103) and a second side surface (105) connected by a bottom surface (104) and a reinforcement means attached to the base beam (102), **characterized in that** the reinforcement means comprises a first reinforcement means (202) having a first side section (203) and a first bottom section (204) and a second reinforcement means (302) having a second side section (305) and a second bottom section (304), wherein the first side section (203) of the first reinforcement means (202) is attached to the first side surface (103) of the base beam (102) and the second side section (305) of the second reinforcement means (302) is attached to the second side surface (105) of the base beam (102), and the first and second bottom section (204, 304) of the first and second reinforcement means (202, 302) are arranged in overlap and are attached to the bottom surface (104) of the base beam (102).

10. A method for producing a structural beam (101) according to claim 1, **characterized by** the steps of:
1) arranging the first reinforcement means (202) inside the base beam (102) such that the bottom section (204) of the first reinforcement means (202) is positioned on the bottom surface (104) of the base beam (102), and the first side section (203) of the first reinforcement means (202) is arranged in conjunction with the first side surface (103) of the base beam (102);
2) attaching the first side section (203) of the first reinforcement means (202) to the first side surface (103) of the base beam (102);
3) arranging the second reinforcement means (302) inside the base beam (102) such that the second bottom section (304) of the second reinforcement means (302) is positioned on the first bottom section (204) of the first reinforcement means (202), and the second side section (305) of the second reinforcement means (302) is arranged in conjunction with the second side surface (105) of the base beam (102);
4) attaching the second side section (305) of the second reinforcement means (302) to the second side surface (105) of the base beam (102); and
5) attaching the first and second bottom section (204, 304) of the first and second reinforcement means (202, 302) to the bottom surface (104) of the base beam (102).

11. Method for producing a structural beam (101) according to claim 10, wherein in the steps 1) and 3) the first and second reinforcement means (202, 302) are arranged on the outside the base beam (102).

12. Method for producing a structural beam (101) according to claim 10, wherein in the steps 1) and 3) one of the first and second reinforcement means (202, 302) is arranged on the inside of the base beam (102), and the other one of the first and second reinforcement means (202, 302) is arranged on the outside of the base beam (102).

## Patentansprüche

1. Träger (101) zum Anordnen in einer Fahrzeugkarosserie, wobei der Träger (101) aufweist: einen Grundträger (102) mit einer ersten Seitenfläche (103) und einer zweiten Seitenfläche (105), die durch eine Bodenfläche (104) verbunden sind, und eine Verstärkungseinrichtung, die am Grundträger (102) befestigt ist, **dadurch gekennzeichnet, daß** die Verstärkungseinrichtung eine erste Verstärkungseinrichtung (202) mit einem ersten Seitenteilstück (203) und einem ersten Bodenteilstück (204) sowie eine zweite Verstärkungseinrichtung (302) mit einem zweiten Seitenteilstück (305) und einem zweiten Bodenteilstück (304) aufweist, wobei das erste Seitenteilstück (203) der ersten Verstärkungseinrichtung (202) an der ersten Seitenfläche (103) des Grundträgers (102) befestigt ist und das zweite Seitenteilstück (305) der zweiten Verstärkungseinrichtung (302) an der zweiten Seitenfläche (105) des Grundträgers (102) befestigt ist und das erste und zweite Bodenteilstück (204, 304) der ersten und zweiten Verstärkungseinrichtung (202, 302) in Überlappung angeordnet und an der Bodenfläche (104) des Grundträgers (102) befestigt sind.

2. Träger (101) nach Anspruch 1, **dadurch gekennzeichnet, daß** der Grundträger (102) einen im wesentlichen U-förmigen Querschnitt hat.

3. Träger (101) nach Anspruch 2, **dadurch gekennzeichnet, daß** der Grundträger (102) einen solchen U-förmigen Querschnitt hat, daß der Winkel zwischen der Bodenfläche (104) und der ersten Seitenfläche (103) und/oder der zweiten Seitenfläche (105) zwischen 155° und 70°, vorzugsweise zwischen 145° und 80° und am stärksten bevorzugt zwischen 135° und 90° liegt.

4. Träger (101) nach Anspruch 1, 2 oder 3, **dadurch gekennzeichnet, daß** die erste und/oder zweite Verstärkungseinrichtung (202, 302) einen im wesentlichen L-förmigen Querschnitt haben.

5. Träger (101) nach einem der vorstehenden Ansprüche, **dadurch gekennzeichnet, daß** die erste und/oder zweite Verstärkungseinrichtung (202, 302) einen solchen L-förmigen Querschnitt haben, daß der Winkel zwischen dem Bodenteilstück (204, 304) und dem ersten bzw. zweiten Seitenteilstück (203, 305) zwischen 155° und 90°, vorzugsweise zwischen 145° und 90° und am stärksten bevorzugt zwischen 135° und 90° liegt.

6. Träger (101) nach einem der vorstehenden Ansprüche, **dadurch gekennzeichnet, daß** die Überlappung des ersten und zweiten Bodenteilstücks (203, 04) der ersten und zweiten Verstärkungseinrichtung (202, 302) mindestens 1/3, vorzugsweise mindestens 1/2 und am stärksten bevorzugt mindestens 2/3 der Ausdehnung der Bodenfläche (104) des Grundträgers (102) beträgt.

7. Träger (101) nach einem der vorstehenden Ansprüche, **dadurch gekennzeichnet, daß** die erste und/oder zweite Verstärkungseinrichtung (202, 302) am Grundträger (102) mittels Schweißen, mechanischer Befestigung, Kleben o. ä. befestigt sind.

8. Träger (101) nach einem der vorstehenden Ansprüche, **dadurch gekennzeichnet, daß** die erste und/oder zweite Verstärkungseinrichtung (202, 302) aus Stahl mit extrem hoher Festigkeit hergestellt sind.

9. Fahrzeug, z. B. Automobil, SUV, Lastkraftwagen o. ä., das mit einem Träger (101) nach Anspruch 1 versehen ist, der aufweist: einen Grundträger (102) mit einer ersten Seitenfläche (103) und einer zweiten Seitenfläche (105), die durch eine Bodenfläche (104) verbunden sind, und eine Verstärkungseinrichtung, die am Grundträger (102) befestigt ist, **dadurch gekennzeichnet, daß** die Verstärkungseinrichtung eine erste Verstärkungseinrichtung (202) mit einem ersten Seitenteilstück (203) und einem ersten Bodenteilstück (204) sowie eine zweite Verstärkungseinrichtung (302) mit einem zweiten Seitenteilstück (305) und einem zweiten Bodenteilstück (304) aufweist, wobei das erste Seitenteilstück (203) der ersten Verstärkungseinrichtung (202) an der ersten Seitenfläche (103) des Grundträgers (102) befestigt ist und das zweite Seitenteilstück (305) der zweiten Verstärkungseinrichtung (302) an der zweiten Seitenfläche (105) des Grundträgers (102) befestigt ist und das erste und zweite Bodenteilstück (204, 304) der ersten und zweiten Verstärkungseinrichtung (202, 302) in Überlappung angeordnet und an der Bodenfläche (104) des Grundträgers (102) befestigt sind.

10. Verfahren zur Herstellung eines Trägers (101) nach Anspruch 1, **gekennzeichnet durch** die Schritte:
1) Anordnen der ersten Verstärkungseinrichtung (202) innerhalb des Grundträgers (102), so daß das Bodenteilstück (204) der ersten Verstärkungseinrichtung (202) auf der Bodenfläche (104) des Grundträgers (102) positioniert ist und das erste Seitenteilstück (203) der ersten Verstärkungseinrichtung (202) in Verbindung mit der ersten Seitenfläche (103) des Grundträgers (102) angeordnet ist;
2) Befestigen des ersten Seitenteilstücks (203) der ersten Verstärkungseinrichtung (202) an der ersten Seitenfläche (103) des Grundträgers (102);
3) Anordnen der zweiten Verstärkungseinrichtung (302) innerhalb des Grundträgers (102), so daß das zweite Bodenteilstück (304) der zweiten Verstärkungseinrichtung (302) auf dem ersten Bodenteilstück (204) der ersten Verstärkungseinrichtung (202) positioniert ist und das zweite Seitenteilstück (305) der zweiten Verstärkungseinrichtung (302) in Verbindung mit der zweiten Seitenfläche (105) des Grundträgers (102) angeordnet ist;
4) Befestigen des zweiten Seitenteilstücks (305) der zweiten Verstärkungseinrichtung (302) an der zweiten Seitenfläche (105) des Grundträgers (102); und
5) Befestigen des ersten und zweiten Bodenteilstücks (204, 304) der ersten und zweiten Verstärkungseinrichtung (202, 302) an der Bodenfläche (104) des Grundträgers (102).

11. Verfahren zur Herstellung eines Trägers (101) nach Anspruch 10, wobei in den Schritten 1) und 3) die erste und zweite Verstärkungseinrichtung (202, 302) auf der Außenseite des Grundträgers (102) angeordnet werden.

12. Verfahren zur Herstellung eines Trägers (101) nach Anspruch 10, wobei in den Schritten 1) und 3) eine Komponente aus der ersten und zweiten Verstärkungseinrichtung (202, 302) auf der Innenseite des Grundträgers (102) angeordnet wird und die andere Komponente aus der ersten und zweiten Verstärkungseinrichtung (202, 302) auf der Außenseite des Grundträgers (102) angeordnet wird.

## Revendications

1. Poutre structurelle (101) destinée à être montée sur une carrosserie de véhicule, laquelle poutre structurelle (101) comprend une poutre de base (102) présentant une première surface latérale (103) et une seconde surface latérale (105) reliées par une surface inférieure (104), et un moyen de renforcement fixé sur la poutre de base (102), **caractérisée en ce que** le moyen de renforcement comprend un premier moyen de renforcement (202) présentant une première section latérale (203) et une première section inférieure (204) et un second moyen de renforcement (302) présentant une seconde section latérale (305) et une seconde section inférieure (304), dans lequel la première section latérale (203) du premier moyen de renforcement (202) est fixée sur la première surface latérale (103) de la poutre de base (102) et la seconde section latérale (305) du second moyen de renforcement (302) est fixée sur la seconde surface latérale (105) de la poutre de base (102), et les première et seconde sections inférieures (204, 304) des premier et second moyens de renforcement (202, 302) sont agencées en recouvrement et sont fixées sur la surface inférieure (104) de la poutre de base (102).

2. Poutre structurelle (101) selon la revendication 1, **caractérisée en ce que** la poutre de base (102) présente une section transversale sensiblement en forme de U.

3. Poutre structurelle (101) selon la revendication 2, **caractérisée en ce que** la poutre de base (102) présente une section transversale en forme de U de telle sorte que l'angle entre la surface inférieure (104) et la première surface latérale (103) et/ou la seconde surface latérale (105) respectivement est compris entre 155° et 70°, de préférence entre 145° et 80° et plus préférablement entre 135° et 90°.

4. Poutre structurelle (101) selon les revendications 1, 2 ou 3, **caractérisée en ce que** les premier et/ou second moyens de renforcement (202, 302) présentent une section transversale sensiblement en forme de L.

5. Poutre structurelle (101) selon l'une quelconque des revendications précédentes, **caractérisée en ce que** les premier et/ou second moyens de renforcement (202, 302) présentent une section transversale en forme de L de telle sorte que l'angle entre la section inférieure (204, 304) et respectivement les première et seconde sections latérales (203, 305) est compris entre 155° et 90°, de préférence entre 145° et 90° et plus préférablement entre 135° et 90°.

6. Poutre structurelle (101) selon l'une quelconque des revendications précédentes, **caractérisée en ce que** le recouvrement des première et seconde sections inférieures (204, 304) des premier et second moyens de renforcement (202, 302) est d'au moins 1/3, de préférence d'au moins 1/2, et plus préférablement d'au moins 2/3, de l'étendue de la surface inférieure (104) de la poutre de base (102).

7. Poutre structurelle (101) selon l'une quelconque des revendications précédentes, **caractérisée en ce que** les premier et/ou second moyens de renforcement (202, 302) sont fixés sur la poutre de base (102) au moyen du soudage, par liaison mécanique, par adhésion, ou analogue.

8. Poutre structurelle (101) selon l'une quelconque des revendications précédentes, **caractérisée en ce que** les premier et/ou second moyens de renforcement (202, 302) sont réalisés en un acier à résistance ultra élevée.

9. Véhicule tel qu'une automobile, un véhicule utilitaire sport SUV, un camion ou analogue comportant une poutre structurelle (101) selon la revendication 1, comprenant une poutre de base (102) présentant une première surface latérale (103) et une seconde surface latérale (105) reliées par une surface inférieure (104), et un moyen de renforcement fixé sur la poutre de base (102), **caractérisée en ce que** le moyen de renforcement comprend un premier moyen de renforcement (202) présentant une première section latérale (203) et une première section inférieure (204) et un second moyen de renforcement (302) présentant une seconde section latérale (305) et une seconde section inférieure (304), dans lequel la première section latérale (203) du premier moyen de renforcement (202) est fixée sur la première surface latérale (103) de la poutre de base (102) et la seconde section latérale (305) du second moyen de renforcement (302) est fixée sur la seconde surface latérale (105) de la poutre de base (102), et les première et seconde sections inférieures (204, 304) des premier et second moyens de renforcement (202, 302) sont agencées en recouvrement et sont fixées sur la surface inférieure (104) de la poutre de base (102).

10. Procédé de production d'une poutre structurelle (101) selon la revendication 1, **caractérisé par** les étapes consistant à :
1) agencer le premier moyen de renforcement (202) à l'intérieur de la poutre de base (102) de telle sorte que la section inférieure (204) du premier moyen de renforcement (202) soit positionnée sur la surface inférieure (104) de la poutre de base (102), et la première section latérale (203) du premier moyen de renforcement (202) soit agencée de manière conjuguée avec la première surface latérale (103) de la poutre de base (102) ;
2) fixer la première section latérale (203) du premier moyen de renforcement (202) sur la première surface latérale (103) de la poutre de base (102) ;
3) agencer le second moyen de renforcement (302) à l'intérieur de la poutre de base (102) de telle sorte que la seconde section inférieure (304) du second moyen de renforcement (302) soit positionnée sur la première section inférieure (204) du premier moyen de renfoncement (202), et la seconde section latérale (305) du second moyen de renforcement (302) soit agencée de manière conjuguée avec la seconde surface latérale (105) de la poutre de base (102) ;
4) fixer la seconde section latérale (305) du second moyen de renforcement (302) sur la seconde surface latérale (105) de la poutre de base (102) ; et
5) fixer les première et seconde sections inférieures (204, 304) des premier et second moyens de renforcement (202, 302) sur la surface inférieure (104) de la poutre de base (102).

11. Procédé de production d'une poutre structurelle (101) selon la revendication 10, dans lequel, dans les étapes 1) et 3), les premier et second moyens de renforcement (202, 302) sont agencés à l'extérieur de la poutre de base (102).

12. Procédé de production d'une poutre structurelle (101) selon la revendication 10, dans lequel, dans les étapes 1) et 3), l'un des premier et second moyens de renforcement (202, 302) est agencé à l'intérieur de la poutre de base (102), et l'autre des premier et second moyens de renforcement (202, 302) est agencé sur l'extérieur de la poutre de base (102).
